# EUROPEAN PATENT SPECIFICATION

(11) **EP 3 950 647 B1**
(45) Date of publication and mention of the grant of the patent: **22.10.2025**
(21) Application number: 19920913.1
(22) Date of filing: 27.03.2019
(51) Int. Cl.: C05F 11/10, C05G 1/00, C05D 9/02, C05G 5/10, C05G 5/23, C05F 11/00, C05F 11/02, A01N 43/36, A01N 37/44, A01N 25/00, A01N 37/36, A01P 21/00

(54) **USE OF PYROGLUTAMIC ACID AS PLANT-ASSIMILABLE POTASSIUM BOOSTER**
VERWENDUNG VON PYROGLUTAMINSÄURE ALS PFLANZENASSIMILIERBAREN KALIUM-BOOSTER
EUTILISATION DE L'ACID PYROGLUTAMIQUE COMME ACTIVATEUR DE POTASSIUM ASSIMILABLE PAR LES PLANTES

(43) Date of publication of application: 09.02.2022
(73) Proprietor: Fertinagro Biotech, S.L., 44195 Teruel (ES)
(72) Inventor: ATARES REAL, Sergio, 44195 Teruel (ES); ROMERO LOPEZ, Joaquín, 44195 Teruel (ES); SALAET MADORRAN, Ignasi, 44195 Teruel (ES); FERRER GINES, María, 44195 Teruel (ES); CABALLERO MOLADA, Marcos, 44195 Teruel (ES); YANCE CHAVEZ, Tula del Carmen, 44195 Teruel (ES); FUERTES DOÑATE, Carlos, 44195 Teruel (ES)
(74) Representative: González López-Menchero, Álvaro Luis
(86) International application number: PCT/ES2019/070208
(87) International publication number: WO 2020/193819

(56) References cited:
- EP-A1- 3 094 178
- EP-A1- 3 430 905
- EP-B1- 3 094 178
- WO-A1-2015/107336
- WO-A1-2017/158225
- WO-A1-2017/158225
- CN-A- 107 793 252
- CN-A- 107 793 252
- CN-A- 108 863 580
- CN-A- 108 863 580
- DATABASE WPI Week 201911, Derwent World Patents Index; AN 2018-95499W, XP002807700
- DATABASE WPI Week 201826, Derwent World Patents Index; AN 2018-22177Y, XP002807701

## Description

The present invention relates to the use of a fertiliser composition comprising a plant-assimilable potassium booster.

More specifically, in a first aspect, the invention provides the use of a fertiliser composition that includes pyroglutamic acid as a plant-assimilable potassium booster, wherein pyroglutamic acid improves potassium levels in the sap and plant tissues, the application thereof constituting an alternative to conventional potassium fertilisers.

Also described is the use of a combination of the described fertiliser composition together with another additional fertiliser and/or biostimulant.

Potassium is the most abundant inorganic cation in plant tissues (accounting for up to 6% of dry matter) and is an essential macronutrient for plant growth (Leigh RA, Wyn Jones RG (1984) "A hypothesis relating critical potassium concentration for the growth and distribution of this ion in the plant cell", New Phytol 97:1-13; Oosterhuis et al., 2014, "The Physiology of Potassium in Crop Production. Advances in Agronomy", Volume 126). This nutrient has numerous physiological and biochemical functions in plants (e.g. osmoregulation, enzyme activation, stomata opening, cell extension, photosynthesis, nutrient uptake and transport, protein synthesis), so its deficiency negatively affects growth and stress tolerance and leads to significant losses in crop yields.

Total potassium in soils can be found in 4 different forms depending on its availability to plants (Syers JK (2003) Potassium in soils: current concepts. In: Johnston AE (ed) Proceedings of the IPI Golden Jubilee Congress 1952-2002 held at Basel Switzerland 8-10 Oct 2002. Feed the soil to feed the people. The role of potash in sustainable agriculture. International Potash Institute, Basel, pp 301-310; Römheld and Kirkby, 2010, Research on potassium in agriculture: needs and prospects", Plant Soil 335:155-180):
i) Structural potassium. Contains 90 to 98% of total potassium and is not available to plants. It is retained in the structure of primary potassium-containing minerals such as feldspars and micas. The release of potassium occurs very slowly, mainly by weathering.
ii) Non-exchangeable potassium. It constitutes 1-10% of total potassium and slowly releases assimilable and exchangeable forms of potassium. It is found in minerals such as illite, which originates from the weathering of micaceous clay minerals.
iii) Exchangeable potassium. It accounts for 1 to 2% of total potassium in the soil and is retained in the negatively charged sites of clays and organic matter, being in rapid equilibrium with the soil solution and considered a form of potassium readily available to plants. Together with non-exchangeable potassium it is the major contributor to potassium uptake by plants.
iv) Potassium in solution in soil. This is the potassium immediately available to plants and accounts for 0.1 to 0.2% of total potassium in the soil, representing only about 5% of a crop's demand at any one time. This form of potassium is replenished by exchangeable and non-exchangeable potassium reserves.

Although total potassium reserves in agricultural soils worldwide are mostly high, most of them have insufficient concentrations of potassium in a form that can be assimilated by crops. The application of mineral potassium fertilisers for proper crop growth is common in agronomic practices and is necessary to replenish the potassium in solution and exchangeable potassium lost due to crop removals and leaching (Liu et al., 2012, "Isolation of Paenibacillus sp. and assessment of its potential for enhancing mineral weathering", Geomicrobiol J 29:413-421). However, the use of mineral fertilisers entails high costs for the farmer, the dependence of agriculture on fossil fuels and pollution of the environment when fertiliser use is inappropriate or abusive (Tilman et al., 2002, "Agricultural sustainability and intensive production practices", Nature. 418: 671-7). Furthermore, given the heterogeneity in the minerals that give rise to each soil and the erosion that has occurred in them, the amount of potassium to be applied to sustain agricultural practices varies widely, with the lack of adequate potassium replenishment in soils leading to the loss of soil structure and fertility.

Naturally, the recycling of the reserves of exchangeable potassium and potassium in solution in soils depends mainly on the activity of bacteria that solubilise insoluble or mineral potassium, and thus play a central role in the cycle of said element (Zeng et al, 2012, "Characterization and potassium-solubilizing ability of Bacillus circulans Z1-3", Adv Sci Lett 10:173-176; Diep and Hieu, 2013, "Phosphate and potassium solubilizing bacteria from weathered materials of denatured rock mountain", Ha Tien, Kie^n Giang province Vietnam. Am J Life Sci 1:88-92). In fact, some solutions designed to solve the above problems consist of using products to improve potassium solubilisation in soil (WO2018229309A1) or applying inocula of potassium-solubilising microorganisms to soils (WO2011154961A1), Maurya, B.R., Meena, V.S., Meena, O.P. 2014. "Influence of Inceptisol and Alfisol's potassium solubilizing bacteria (KSB) isolates on release of K from Waste mica." Vegetos. 27, 181-187; PramanikP·, Goswami A.J, Ghosh S. , KalitaC. 2019. "An indigenous strain of potassium-solubilizing bacteria Bacillus pseudomycoides enhanced potassium uptake in tea plants by increasing potassium availability in the mica waste-treated soil of North-east India." JApplMicrobiol. 126(1):215-222. doi: 10.1111/jam.14130).

For the above reasons, there is currently a need in the plant nutrition sector to look for alternatives to conventional potassium fertilisation to reduce or eliminate the use of mineral potassium fertilisers and to increase crop productivity in a sustainable way by increasing the solubilisation of potassium present in the soil by the potassium-solubilising microorganisms already present in the soil.

Furthermore, plants exude through the roots a considerable part of the organic compounds generated in photosynthesis (between 11 and 40%) in order to regulate the chemical composition of the rhizosphere and promote the growth of microorganisms that can bring benefits to the plant in a given ecosystem (Badri and Vivanco, 2009, "Regulation and function of root exudates", Plant, Cell and Environment 32, 666-681; Zhalnina et al. 2018, "Dynamic root exudate chemistry and microbial substrate preferences drive patterns in rhizosphere microbial community assembly", Nat Microbiol, 3(4):470-480). Compounds present in root exudates include sugars, amino acids, organic acids, fatty acids and secondary metabolites (Bais et al., 2006, "The role of root exudates in rhizosphere interactions with plants and other organisms", Annu Rev Plant Biol. 57:233-66 ). In addition to the cultivated species and its phenological stage, the composition and quantity of these exudates are mainly influenced by environmental signals, e.g. the availability of nutrients in the soil.

In fact, plants have adaptive mechanisms for adaptation to soils with low assimilable potassium, including root-level exudation of molecules that serve as substrate for soil bacteria to synthesise metabolites involved in the weathering of minerals and the subsequent release of the potassium they contain (Meena et al., 2016, "Potassium-Solubilizing Microorganism in Evergreen Agriculture: An Overview", V.S. Meena et al. (eds.), Potassium Solubilizing Microorganisms for Sustainable Agriculture, DOI 10.1007/978-81-322-2776-2_1). In addition, root exudates modulate the composition and activity of soil microbial communities, favouring those that directly or indirectly enhance inorganic potassium solubilisation or organic potassium mineralisation (Gahoonia et al, 1997, "Root hairs and phosphorus acquisition of wheat and barley cultivars", Plant and Soil 191:181-188; Etesami et al., 2017, "Potassium solubilizing bacteria (KSB): Mechanisms, promotion of plant growth, and future prospects - a review", Journal of Soil Science and Plant Nutrition, 2017, 17(4), 897-911). The main mechanisms of action employed by potassium-solubilizing bacteria are: i) acidification of the rhizosphere through the release of organic acids and protons; release of Si4+, Al3+, Fe2+ and Ca2+ ion chelates associated with potassium minerals; acidolysis; and release of exopolysaccharides (Ahmad et al., 2016; Etesami et al., 2017, "Potassium-solubilizing bacteria and their application in agriculture", in: Meena, V.S., Maurya, B.R., Verma, J.P., Meena, R.S. (Eds.), Potassium solubilizing microorganisms for sustainable agriculture. Springer India, New Delhi, pp. 293-313).

Several documents of the prior art had already described fertiliser compositions comprising pyroglutamic acid to improve different plant conditions (CN108863580 A, CN107793252 A, WO2017/158225, WO2015/107336).

In view of the above, the present invention builds on the above-mentioned approaches so that, on the one hand, by regulating the potassium transformation processes in soils, root exudates can increase the availability of this nutrient for plants and the efficiency of its use in agricultural soils and, on the other hand, it constitutes an alternative to the use of traditional potassium fertilisers.

It would therefore be desirable to have fertilisers that mimic root exudates and have an analogous effect that can make it possible to dispense with or reduce the application of mineral fertilisers and mitigate environmental pollution, while providing an alternative to conventional potassium fertilisation to reduce pollution from its use and increase the efficiency of potassium use and crop productivity in a sustainable way.

The present invention fulfils both of the above objectives by providing the use of a fertiliser composition that includes pyroglutamic acid as a plant-assimilable potassium booster, wherein pyroglutamic acid improves potassium levels in the sap and plant tissues.

Pyroglutamic acid, or 5-oxopyrrolidin-2-carboxylic acid, is an amino acid derived from glutamine or glutamic acid with ubiquitous presence in living cells, from archaea to humans (Kumar, Bachhawat. 2012. "Pyroglutamic acid: throwing light on a lightly studied metabolite." Current Science Vol. 102, No. 2, pp. 288-297).

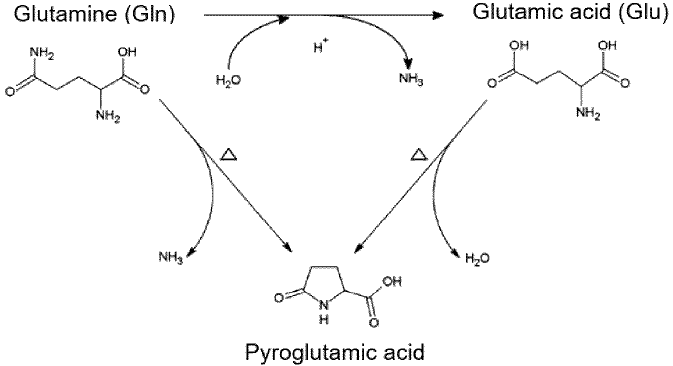

As mentioned above, in a first aspect, the present invention provides the use of a fertiliser composition that includes pyroglutamic acid as a plant-assimilable potassium booster.

In one embodiment, the fertiliser composition here disclosed consists of 100% by weight of pyroglutamic acid in the form of a water-soluble powder.

In another embodiment, the fertiliser composition here disclosed comprises between 30 and 80% by weight of pyroglutamic acid and between 5 and 30% by weight of other components selected from the group consisting of sugars, amino acids other than pyroglutamic acid, glutamine and glutamic acid, organic acids, polyamines, glycerol, myoinositol, adenine, uracil, cytosine, guanine and combinations thereof, the fertiliser composition being in the form of a water-soluble powder.

When present in the present fertiliser composition, sugars are preferably selected from mono- and di-saccharides such as sucrose, fructose, trehalose, glucose, arabinose, maltose, as well as mixtures thereof.

When present in the present fertiliser composition, amino acids other than pyroglutamic acid, glutamine and glutamic acid are preferably selected from threonine, lysine, phenylalanine, methionine, GABA, ornithine, glycine, aspartic acid, serine, asparagine, tyrosine, tryptophan, valine, leucine, isoleucine, proline, 4-hydroxyproline, arginine, histidine, alanine, cysteine, and mixtures thereof.

When present in the present fertiliser composition, the organic acids are preferably selected from lactic acid, succinic acid, oxalic acid, gluconic acid, threonic acid, fumaric acid and mixtures thereof.

Polyamines, if present in the present composition, are preferably selected from putrescine, spermidine, spermine and mixtures thereof.

The presence of these components other than pyroglutamic acid in the composition of the invention is based on the fact that such components form part of the root exudates in the crops tested in the absence of potassium described below or are described in the literature as components of said exudates under normal conditions for plant development (Zhalnina et al., 2018), and are therefore desirable for the aforementioned purpose of having a fertiliser composition that mimics the root exudates with a similar effect that can make it possible to dispense with or reduce the application of mineral fertilisers.

The fertiliser composition described herein is formulated in the form of a water-soluble powder, as indicated above, but can also be formulated in the form of a liquid composition by dissolving it in water. Mention is also done to a formulation in the form of granules obtained by adding granulating agents known to the person skilled in the art.

Herein, it is also described the use of a fertiliser composition as described above in combination with another additional fertiliser selected from nitrogen fertilisers, phosphate fertilisers, potassium fertilisers, calcium fertilisers and amendments, micronutrients, boric acid, leonardite and feldspar and combinations thereof, and/or in combination with one or more biostimulants selected from the group consisting of amino acid hydrolysates, humic extracts, algae extracts, live micro-organisms, extracts of micro-organisms and combinations thereof. The live micro-organisms or extracts of micro-organisms shall preferably be of the species *Pichia guilliermondii, Azotobacter, chroococcum, Bacillus edaphicus, Bacillus mucilaginosus, Bacillus circulans, Enterobacter xiangfangensis, Enterobacter hormaechei,* or other bacteria belonging to genera recognised for their solubilising capacity: Pseudomonas, Bacillus, Arthrobacter, Enterobacter, Klebsiella, Burkholderia, Acidothiobacillus and Paenibacillus (Welch, S.A., Ullman, W.J., 1999. "The effect of microbial glucosemetabolism on bytownite feldspar dissolution rates between 5 and 35°C." Geochem. Cosmochim. Acta 63, 3247-3259.; Sheng XF. 2005. "Growth promotion and increased potassium uptake of cotton and rape by a potassium releasing strain of Bacillus edaphicus." Soil Biol Biochem 37:1918-1922; Lian B, Fu PQ, Mo DM, Liu CQ. 2002. "A comprehensive review of the mechanism of potassium release by silicate bacteria." Acta Mineral Sin 22:179-182; Li FC, Li S, Yang YZ, Cheng LJ. 2006. "Advances in the study of weathering products of primary silicate minerals, exemplified by mica and feldspar." Acta Petrol Mineral 25:440-448; Liu D, Lian B, Dong H. 2012. "Isolation of Paenibacillus sp. and assessment of its potential for enhancing mineral weathering." Geomicrobiol J 29:413-421; Ahmad et al., 2016).

In this case, the composition of the invention is present in the combination in a proportion of 0.5 to 10% by weight.

The additional nitrogen fertiliser may be present in the combination in a proportion of 5 to 90% by weight and is selected from urea, ammonium nitrosulphate, potassium nitrate, ammonium sulphate, ammonium nitrate, calcium nitrate.

The additional phosphate fertiliser may be present in the combination in a proportion of 5 to 90% by weight and is selected from phosphate rock, triple superphosphate, single superphosphate, concentrated superphosphate, phosphoric acid.

The additional potassium fertiliser may be present in the blend in a proportion of 5 to 90% by weight and is selected from potassium chloride, potassium sulphate, potassium and magnesium double sulphate, potassium hydroxide.

The additional calcium fertiliser may be present in the blend in a proportion of 5 to 90% by weight and is selected from calcium chloride, calcium cyanamide, calcium sulphate, dolomite, limestone, calcium oxide, calcium hydroxide.

The additional micronutrient fertiliser may be present in the combination in a proportion of 1 to 30% by weight and is selected from iron sulphate, magnesium sulphate, zinc sulphate, manganese sulphate, copper sulphate, ammonium molybdate, cobalt chloride.

Boric acid as an additional fertiliser may be present in the combination in a proportion of 1 to 30% by weight.

Leonardite as an additional fertiliser may be present in the combination in a proportion of 5 to 90% by weight.

Feldspar as an additional fertiliser may be present in the combination in a proportion of 5 to 90% by weight.

In the case of the combination of the fertiliser composition with biostimulants as described above, preferably the biostimulants are present in the combination in a proportion of 5 to 90% by weight.

It is also the object of the invention the use of the fertiliser compositions described here in the form of a water-soluble powder or in the form of a liquid pre-dissolved in water for the application thereof by fertigation or foliar application.

If the fertilizer composition is used in the form of a water-soluble powder by fertigation or by foliar application pre-dissolved in water, it is applied in an amount of 0.5 to 20 kg/ha and 0.06 to 1 kg/ha respectively.

If the composition is used in combination with another additional fertiliser in the form of granules, preferably said combination is applied directly in an amount of 75 to 1,500 kg/ha.

If the composition is used in combination with biostimulants in the form of a liquid for the application thereof by fertigation or foliar application, it is preferably applied in an amount of 0.5 to 20 kg/ha and 0.06 to 1 kg/ha respectively.

### Examples

### 1. Trial to obtain and identify root exudates in the absence of potassium.

In order to characterise in detail the response of crops to potassium deficiency and to identify the metabolites exuded by roots that have the greatest influence on potassium dynamics in the soil, the Applicant analysed the differential exudate profile of two crop species of agronomic interest, maize and tomato, in the absence of potassium. The following is a brief description of the trial to determine the root exudates emitted in the absence of potassium.

The method, similar to that used by other authors (Naveed et al., 2017, "Plant exudates may stabilize or weaken soil depending on species, origin and time", European Journal of Soil Science) was the same for both maize seeds (variety LG 34.90) and tomato seeds (variety Agora Hybrid F1). The seeds were surface sterilised by washing for 5 minutes in 96% ethanol, followed by 10 minutes in 5% bleach. The seeds were then washed extensively and allowed to hydrate in sterile MilliQ water for 4 hours. For germination, the seeds were placed on a bed of filter paper moistened with sterile MilliQ water. The seeds were left to germinate in darkness for 4 days, after which the seedlings were placed in hydroponic culture trays with the roots immersed in standard Hoagland nutrient solution. Twelve plants were placed in each tray, with three trays (each corresponding to a biological replicate) for the control treatment and three trays for the potassium-free treatment. The plants were grown at a temperature and photoperiod of 25 °C and 16 h light/22 °C and 8 h darkness and a light intensity of 4,000 lux on the surface.

The nutrient solution was replaced with fresh solution every three days and kept aerated at all times by bubbler probes. After 10 days of growth, the plants were subjected to the potassium depletion treatment. For this, three trays were incubated for three days with modified Hoagland solution without potassium and the remaining three trays were incubated with full solution. After incubation, root exudates were obtained.

The plants were carefully removed from the culture trays and washed with plenty of water, followed by a final wash with distilled water. Plants corresponding to each tray were placed in wide-necked flasks containing 200 ml of MilliQ water, the roots being immersed in the water. The plants were incubated in the flasks for 6 hours. Subsequently, the plants were removed and the insoluble material was removed from the solution by filtering with 0.20 µm filters. The filtered material was flash-frozen in liquid nitrogen and freeze-dried. The dried material obtained was weighed and analysed by gas-mass chromatography after derivatisation with methoxyamine and N-methyl-(trimethylsilyltrifluoroacetamide).

Table 1 shows the metabolites exuded by the plants and their ratios under potassium-free versus control conditions.

**Table 1**

| Increase in metabolites released in the absence of potassium. K/K ratio | | | |
|---|---|---|---|
| Maize | | Tomato | |
| Increase in metabolites released in the absence of potassium. K/K ratio | | | |
| Asparagine | 46.30 | Pyroglutamic acid | 28.83 |
| Threonine | 29.54 | Methionine | 25.66 |
| Lysine | 26.78 | Lysine | 19.12 |
| Methionine | 26.19 | Succinic acid | 17.69 |
| Glutamine | 25.13 | Asparagine | 16.41 |
| Glutamic acid | 20.86 | Maltose | 15.38 |
| Ornithine | 17.79 | GABA | 14.56 |
| Succinic acid | 13.34 | Lactic acid | 13.14 |
| Phenylalanine | 11.00 | Threonine | 12.09 |
| Pyroglutamic acid | 10.09 | Phenylalanine | 11.34 |
| GABA | 9.99 | Glutamic acid | 8.24 |
| Maltose | 9.04 | Glutamine | 7.55 |
| Glycine | 6.85 | Urea | 6.77 |
| Urea | 5.08 | Glucose | 2.93 |
| Tyrosine | 4.61 | Ornithine | 2.85 |
| Glucose | 3.12 | Glycine | 2.36 |
| Tryptophan | 3.05 | Phosphoric acid | 2.16 |
| Lactic acid | 2.80 | Glycerol | 1.83 |
| Uracil | 2.53 | Fumaric acid | 1.61 |
| Phosphoric acid | 2.20 | Myoinositol | 1.48 |
| Adenine | 1.75 | | |
| Myoinositol | 1.55 | | |
| Glycerol | 1.54 | | |
| Fumaric acid | 1.54 | | |

Based on these results, 9 matching metabolites were selected in the exudates of both crops with a ratio to the control greater than 9. These metabolites were: pyroglutamic acid, methionine, lysine, succinic acid, asparagine, maltose, GABA, threonine and phenylalanine. Each of the metabolites was applied separately at a dose of 1 kg/ha in a pot with 3 kg of soil, maize plants were planted (4 pots per treatment with one plant per pot) and the effect on their dry weight was observed after 6 weeks. The effect of the metabolites was compared with a negative control (no treatment) and a positive control with a conventional potassium fertiliser (potassium chloride at a dose of 140 potassium -K₂O- fertiliser units per hectare). The soil came from an agricultural soil with a sandy texture and had not been fertilised with potassium fertilisers for the previous three years. The assimilable potassium content of the soil was 31 ppm, which is considered a very low level of this element for agricultural practices (Guía práctica de la fertilización racional de los cultivos en España *[Handbook of rational fertilisation of crops in Spain],* MAPAMA 2009). This level of assimilable potassium corresponds to 146 kg of K₂O per hectare (considering 30 centimetres of arable soil and an average density of 1,300 kg/m³, the mass per hectare would be approximately 3,900 tonnes). The total potassium level in this soil, including that not available to plants, was 1,033 ppm (4,855 kg K₂O/ha).

The selected metabolites enhance maize growth to varying degrees, as shown in Table 2 below.

**Table 2**

| Dry biomass of maize plants at 6 weeks of growth. | | |
|---|---|---|
| Compound | Dry weight (g) | Standard error |
| Control | 1.23 | ± 0.04 |
| Pyroglutamic acid | 1.88 | ± 0.05 |
| Methionine | 1.55 | ± 0.02 |
| Lysine | 1.29 | ± 0.03 |
| Succinic acid | 1.82 | ± 0.04 |
| Asparagine | 1.27 | ± 0.05 |
| Maltose | 1.78 | ± 0.05 |
| GABA | 1.64 | ± 0.06 |
| Threonine | 1.73 | ± 0.03 |
| Phenylalanine | 1.41 | ± 0.04 |
| Potassium chloride | 1.90 | ± 0.06 |

The above results indicate that pyroglutamic acid is the most growth-enhancing metabolite in maize, achieving the same result as conventional potassium treatment with potassium chloride.

### 2. Application of the fertiliser composition and combination of the invention

Three fertiliser compositions in the form of a water-soluble powder were prepared according to the invention with the following composition:
A: 100% by weight of pyroglutamic acid
B: a combination of 30-80% by weight of pyroglutamic acid and 5-30% maltose, 5-30% GABA and 5-30% phenylalanine;
C: a combination of 30-80% by weight of pyroglutamic acid and 5-30% succinic acid, 5-30% threonine and 5-30% methionine.

These products (A, B, C) were tested in field trials on maize and tomato plants and compared with a negative control (no treatment) and a positive control of conventional potassium fertilisation consisting of potassium chloride (D). The rates and mode of application were as follows:
- For maize:
   - A: 5.0 kg/ha via fertigation.
   - B: 5.0 kg/ha via fertigation.
   - C: 5.0 kg/ha via fertigation.
   - D: potassium chloride: 140 phosphorus fertiliser units (K₂O) per hectare
- For tomato:
   - A: 10.0 kg/ha via fertigation.
   - B: 10.0 kg/ha via fertigation.
   - C: 10.0 kg/ha via fertigation.
   - D: potassium chloride: 300 phosphorus fertiliser units (K₂O) per hectare

The treatments significantly improved yield and potassium content of maize (Tables 3 and 4) as well as tomato (Tables 5 and 6).

**Table 3**

| Maize yield (Tn grain/ha). | |
|---|---|
| Control | 8.73 |
| A | 9.44 |
| B | 9.82 |
| C | 10.09 |
| D | 10.03 |

**Table 4**

| Potassium concentration in maize. | | |
|---|---|---|
| | % total K in plant | K in sap (mg/l) |
| Control | 1.15 | 3,650 |
| A | 1.39 | 4,400 |
| B | 1.46 | 4,580 |
| C | 1.66 | 4,820 |
| D | 1.58 | 4,760 |

**Table 5**

| Tomato yield (Tn/ha). | |
|---|---|
| Control | 39.3 |
| A | 52.8 |
| B | 55.1 |
| C | 57.2 |
| D | 56.6 |

**Table 6**

| Potassium concentration in tomato. 2nd bunch | | |
|---|---|---|
| | % total K in plant | K in sap (mg/l) |
| Control | 1.69 | 3,270 |
| A | 2.19 | 3,950 |
| B | 2.24 | 4,200 |
| C | 2.32 | 4,450 |
| D | 2.29 | 4,360 |

In order to check whether the increase in potassium content in the treatments studied is due to an increase in the availability of assimilable potassium for the plants, potassium balances were carried out in the trials with maize plants.

In trial 2, the same agricultural soil was used as in trial 1, with an assimilable potassium content of 31 ppm (corresponding to 121 kg/ha potassium and 146 kg/ha K₂O fertiliser units) and a total potassium content of 1,033 ppm (corresponding to 4,029 kg/ha potassium and 4,855 kg/ha K₂O fertiliser units).

In treatments A, B and C, no potassium fertiliser units were added, as none of the molecules used in these treatments contain potassium.

Taking into account the dry weight of the biomass of the maize plants (see Table 7) and the percentage of total potassium in the plants (Table 4), the kg of potassium present in the biomass obtained per hectare can be calculated. As can be seen, the amount of potassium in the dry biomass is higher in all treatments than the amount of potassium available in the soil. Therefore, the increase in potassium content of the plants is necessarily due to an increase in the availability of plant-assimilable potassium thanks to the fertiliser composition with assimilable potassium booster.

**Table 7**

| Potassium balance in maize plants. | | |
|---|---|---|
| | Biomass dry weight (Tn/ha) | kg of K in dry biomass/ha |
| Control | 9.33 | 107.30 |
| A | 10.32 | 143.45 |
| B | 10.54 | 153.88 |
| C | 10.69 | 177.45 |
| D | 10.60 | 167.48 |

## Claims

1. Use of pyroglutamic acid to enhance the assimilation of potassium by plants, **characterised in that** it consists of supplying pyroglutamic acid to plants in the form of a water-soluble powder or a liquid pre-dissolved in water, by fertigation at the rate of 0.5 -20.0 kg per hectare, preferably at a rate of 5.0 - 10.0 kg per hectare, or by foliar application at a rate of 0,06 - 1 kg per hectare.

## Patentansprüche

1. Verwendung von Pyroglutaminsäure zur Verbesserung der Assimilation von Kalium durch Pflanzen, **dadurch gekennzeichnet, dass** sie darin besteht, den Pflanzen Pyroglutaminsäure in Form eines wasserlöslichen Pulvers oder einer in Wasser vorgelösten Flüssigkeit durch Fertigation in einer Menge von 0,5 bis 20,0 kg pro Hektar, vorzugsweise in einer Menge von 5,0 bis 10,0 kg pro Hektar, oder durch Blattanwendung in einer Menge von 0,06 bis 1 kg pro Hektar zuzuführen.

## Revendications

1. Utilisation d'acide pyroglutamique pour améliorer l'assimilation du potassium par des plantes, **caractérisée en ce qu'**elle consiste à fournir à des plantes de l'acide pyroglutamique sous la forme d'une poudre hydrosoluble ou d'un liquide pré-dissous dans de l'eau, par fertigation au taux de 0,5 à 20,0 kg par hectare, de préférence à un taux de 5,0 à 10,0 kg par hectare, ou par application foliaire à un taux de 0,06 à 1 kg par hectare.
